(19) Europäisches Patentamt / European Patent Office / Office européen des brevets

(11) **EP 2 062 951 B1**

(12) **EUROPÄISCHE PATENTSCHRIFT**

(45) Veröffentlichungstag und Bekanntmachung des Hinweises auf die Patenterteilung:
**27.05.2015 Patentblatt 2015/22**

(51) Int Cl.:
**C08G 18/62** *(2006.01)*    **C08F 220/18** *(2006.01)*
**C08G 18/79** *(2006.01)*    **C08G 18/08** *(2006.01)*
**C09J 7/02** *(2006.01)*    **C09J 175/04** *(2006.01)*

(21) Anmeldenummer: **09151852.2**

(22) Anmeldetag: **09.09.2005**

(54) **Dreischichtig aufgebaute Montageklebebänder auf Basis von thermisch vernetzten, viskoelastischen Acrylat-Hotmelts**

Triple layer assembled fitting adhesive bands based on thermally joined viscoelastic acrylate hotmelts

Bandes collantes de montage montées en trois couches à base d'acrylate visqueux et élastique en fusion relié thermiquement

(84) Benannte Vertragsstaaten:
**DE ES FR GB IT**

(30) Priorität: **09.09.2004 DE 102004044086**

(43) Veröffentlichungstag der Anmeldung:
**27.05.2009 Patentblatt 2009/22**

(62) Dokumentnummer(n) der früheren Anmeldung(en) nach Art. 76 EPÜ:
**05792143.9 / 1 802 722**

(73) Patentinhaber: **TESA SE**
**20253 Hamburg (DE)**

(72) Erfinder:
• **Brandes, Kay**
**21259, Otter (DE)**
• **Hansen, Sven**
**22765, Hamburg (DE)**
• **Zöllner, Stephan, Dr.**
**21244, Buchholz /Nordheide (DE)**
• **Speer, Jörg**
**25563 Wrist (DE)**

(56) Entgegenhaltungen:
**EP-A- 1 462 498       DE-A1- 10 163 545**
**US-A1- 2003 017 332**

• **Jürgen Falbe, Manfred Regitz: "Römpp Chemie Lexikon", 1992, Georg Thieme Verlag, Stuttgart New York page 4103, * page 4103, left-hand column ***

## Beschreibung

Die Erfindung beschreibt ein beidseitig klebendes, dreischichtig aufgebautes Haftklebeband, wie es insbesondere zur Erzielung von sehr dauerhaften Verklebung bei hohen Temperaturen eingesetzt werden kann, sowie ein Verfahren zu dessen Herstellung.

Für industrielle Haftklebeband-Anwendungen werden sehr häufig doppelseitig klebende Haftklebebänder eingesetzt, um zwei Materialen miteinander zu verbinden. Man unterscheidet hierbei je nach Typ einschichtige doppelseitig klebende Selbstklebebänder und mehrschichtige doppelseitig klebende Selbstklebebänder.

Einschichtige doppelseitig klebende Selbstklebebänder, sogenannte Transfertapes, sind so aufgebaut, dass die Haftklebeschicht keinen Träger enthält und nur mit entsprechenden Trennmaterialien, z.B. silikonisierten Trennpapieren oder Trennfolien, abgedeckt ist. Transfertapes können einseitig oder beidseitig mit Trennmaterialen abgedeckt sein. Oft werden beidseitig unterschiedlich stark silikonisierte Trennpapiere oder -folien verwendet, damit das Transfertape problemlos zur Rolle gewickelt werden kann und anschließend auch problemlos appliziert werden kann. Transferklebebänder werden häufig verwendet, um die unterschiedlichsten Substrate haftklebrig auszurüsten. Dies geschieht z.B. durch Aufkaschieren des Transfertapes auf das Substrat. Das Trennpapier verbleibt dann als Abdeckung der Haftklebeschicht im Produkt.

Dünnere Transfertapes werden oft mit Selbstklebemassen aus der Lösung hergestellt, dickere Transfertapes mit Selbstklebemassen aus der Schmelze oder durch die sogenannte UV-Polymerisation. Hierbei wird ein vorpolymerisierter Sirup aus Acrylatmonomeren zwischen zwei UV-durchlässigen, antiadhäsiv beschichteten Trennfolien beschichtet und auf der Bahn durch UV-Bestrahlung vernetzt. Beispielhaft seien die Schriften US 4,181,752, EP 084 220 A, EP 202 938 A, EP 277 426 A und US 4,330,590 erwähnt. Nachteilig an dieser Technologie ist der oft hohe Restmonomeranteil in den Selbstklebemassen. Dieser ist für viele Anwendungen nicht akzeptabel. Transfertapes, die mit UVundurchlässigen Zuschlagstoffen gefüllt sind, können auf diese Weise nicht hergestellt werden.

Auch DE 43 03 183 A1 beschreibt ein Verfahren zur Herstellung von dicken Haftklebeschichten, insbesondere für die Herstellung von selbstklebenden Hochleistungsklebstoffartikeln. Dabei wird ein mittels UV-Strahlen zu polymerisierendes Gemisch von Ausgangsmonomeren mit einem lösemittelfreien, gesättigten photopolymerisationsfähigen Polymerisat vermischt und dabei verdickt, woraufhin dieses Gemisch auf einen dehäsiv ausgerüsteten Träger aufgebracht und mit UV-Strahlen bestrahlt wird. Nachteilig ist die Verwendung von einpolymerisierten oder zugesetzten Photoinitiatoren, da die Schichten vergilben können und bei UV-Exposition vor der Verwendung eine oft deutliche Veränderung der klebtechnischen Eigenschaften festzustellen ist. Dann muss - beispielsweise durch UVundurchlässige Verpackungen - erheblicher Aufwand betrieben werden, damit der Kunde eine gleichmäßig hohe Verklebungsleistung bekommt. Zudem besteht die Gefahr bei Verklebung auf UV-transparenten Untergründen, z.B. auf Fensterglas oder transparenten Kunststoffoberflächen, dass photoinitiatorhaltige Schichten nachvernetzen. Damit steigt zwar zunächst die Verklebungsfestigkeit an, aber dann verlacken und verspröden die Schichten durch weitere Vernetzung. Dies führt über kurz oder lang zum Versagen der Verklebung insbesondere unter Scherbelastung.

Transfertapes können geschäumt oder gefüllt sein, um die Eigenschaften zu verbessern, insbesondere zum Beispiel im Hinblick auf die Verklebung gegenüber unebenen Substraten. Die DE 40 29 896 A1 beschreibt ein trägerloses, beidseitig klebendes Selbstklebeband aus einer druckempfindlichen Klebstoffschicht von mehr als 200 $\mu$m Dicke, enthaltend Glasmikrovollkugeln von mehr als 1,5 g/cm$^3$ Dichte. Dieses soll eine besonders gute Haftung aufweisen. Nachteilig ist die hohe Dichte durch die verwendeten Glaskugeln.

Mehrschichtig aufgebaute doppelseitig klebende Klebebänder haben Vorteile gegenüber den einschichtig aufgebauten, da durch die Variation der einzelnen Schichten spezifische Eigenschaften eingestellt werden können. So kann ein dreischichtig aufgebautes Klebeband, bestehend aus einer Träger-Mittelschicht und zwei Deckschichten, symmetrisch oder asymmetrisch aufgebaut sein. Die beiden Deckschichten können jeweils Haftklebeschichten sein, oder beispielsweise die eine Schicht eine Haftklebeschicht und die andere Schicht ein hitzeaktivierbarer Klebstoff. Der Träger, also die Mittelschicht, kann beispielsweise eine Folie, ein Vlies, ein "Non-woven"-Material oder ein Schaumfolienträger sein. Schäume oder schaumartige Träger werden oft verwendet, wenn eine hohe Verklebungsfestigkeit auf unebenen Oberflächen gefordert ist oder wenn Abstände ausgeglichen werden sollen.

So werden für Montageklebebänder oft geschlossenzellige Schaumträger auf Basis von PE (Polyethylen), PU (Polyurethan) oder EVA (Ethylvinylacetat), die doppelseitig klebend mit Synthesekautschuk- oder Acrylathaftkleber ausgerüstet sind, verwendet. Anwendungen sind beispielhaft aufgezählt die Verklebung von Spiegeln, von Zierleisten und Emblemen im Fahrzeugbau, weitere Verwendungen im Automobilbau, ferner die Verwendung in der Möbelindustrie oder im Haushaltsgeräte.

Montagebänder für den Außenbereich besitzen in der Regel Haftklebemassen auf Basis von Polyacrylat. Dieses Material ist besonders witterungsbeständig und sehr langlebig, nahezu inert gegen UV-Licht und gegen den Abbau durch Oxidation bzw. Ozonolyse. Bekannt sich auch Montageklebebänder mit Mittelschichten aus Kautschuk, Styrolblockcopolymeren und Polyurethan. Alle diese Materialien besitzen nicht die guten Alterungs-und Wärmebeständigkeitseigenschaften wie Polyacrylat. Systeme auf Basis von Acrylatblockcopolymeren sind zwar alterungsbeständig, jedoch nicht wärmebeständig genug für Hochleistungsanforderungen, da diese Systeme nur physikalisch über Styrol oder Methylmethacrylat-Domänen vernetzt sind. Die Haftklebemassen erweichen beim Erreichen der Erweichungstemperatur der Domänen (wie bei Styrolblockcopolymeren). Als Folge versagt die Verklebung.

Nachteilig an gewöhnlichen Schaumklebebändern ist auch, dass sie leicht spalten können. Wird beispielsweise PE-Schaum verwendet, dann erweicht dieses Material bei Erwärmung auf etwa 100 °C und die Verklebung versagt. Derartige doppelseitig klebende Montagebänder sind für hochwertige Anwendungen ungeeignet.

Schäume auf Basis von PU sind zwar temperaturbeständiger, sie neigen jedoch zum Vergilben unter UV- und Sonnenlichtbestrahlung. Auch sie sind für Hochleistungsanforderungen oft ungeeignet.

Seit einigen Jahren sind dreischichtig aufgebaute doppelseitig klebende Klebebänder mit Acrylatkern erhältlich. Dieser viskoelastische Acrylatkern ist dabei schaumartig. Die schaumartige Struktur wird dabei erreicht durch die Beimischung von Glas- oder Polymerhohlkugeln in die Acrylatmasse, oder die Acrylatmasse wird geschäumt mittels expandierbarer polymerer "Mikroballons". Angrenzend an diese viskoelastische Schicht sind jeweils Haftklebemassen vorgesehen, in den meisten Fällen ebenfalls basierend auf Acrylat, selten auf Synthesekautschuk oder in speziellen Fällen auch auf hitzeaktivierbare Klebeschichten. Die Vorteile des viskoelastichen Acrylatkerns ergeben sich zum einen aus den Materialeigenschaften des Polyacrylats (wie bereits erwähnt, sind dies eine besondere Witterungsbeständigkeit und Langlebigkeit und weitgehend inertes Verhalten gegen UV-Licht und gegen den Abbau durch Oxidation bzw. Ozonolyse). Durch die Gestaltung der Acrylatkernschicht, beispielsweise bestimmt durch die Comonomerzusammensetzung, Art und Anteil bestimmter Füllstoffe sowie den Vernetzungsgrad sind diese Produkte besonders gut zum Verkleben von Gegenständen auf Substraten mit unebenen Untergründen geeignet. Je nach Wahl des Haftklebers lässt sich ein breites Spektrum an Eigenschaften und Verklebungsfestigkeiten abdecken.

Allerdings haben die vorgenannten Systeme, bedingt durch ihren Herstellprozess, entscheidende Nachteile. Die viskoelastische Acrylatkernschicht wird durch einen Prozess der zweistufigen UV-Polymerisation hergestellt. Bei diesem Prozess wird im ersten Schritt ein Gemisch auf Basis von Acrylatmonomeren, beispielsweise 10 Gew-% Acrylsäure und 90 Gew.-% Isooctylacrylat, in Gegenwart einen Photoinitiators durch UV-Bestrahlung in einem Reaktor bis zu etwa 10 - 20 % Umsatz vorpolymerisiert. Alternativ kann dieser "Acrylic-Syrup" auch durch thermisch initiierte freie radikalische Polymersation gewonnen werden. Im zweiten Schritt wird diesem Acrylic-Syrup, nachdem oft noch weiterer Photoinitiator, Füllstoffe, Glashohlkugeln und Vernetzer zugesetzt wurden, zwischen antiadäsiv beschichteten UV-durchlässigen Folien beschichtet und mittels erneuter UV-Bestrahlung auf der Bahn zu höherem Umsatz polymerisiert und dabei gleichzeitig vernetzt. Das fertige dreischichtige Produkt erhält man beispielsweise nach Zukaschieren der Haftklebeschichten.

Insbesondere die Herstellung "dickerer" viskoelastischer Schichten muss in vielen Fällen unter Sauerstoffausschluss durchgeführt werden. Die Masse wird dann durch Abdeckung mit Folienmaterial geschützt und eine UV-Initüerung durch die Folien hindurch bewirkt. PE-und PP-Folien, die für diesen Zweck z.T. eingesetzt werden, verformen sich unter den Vernetzungs-Reaktionsbedingungen (bei der UV-initiierten Polymerisation wird Reaktionswärme frei, die nicht-temperaturbeständige Folie verformen kann) und sind daher schlecht geeignet. UV-durchlässige Folien wie PET sind wärmebeständiger; allerdings muss hier ein langwellig reagierender Photoinitiator in die Masse gegeben werden, damit die Reaktion stattfindet. Daher neigen diese Schichten zur Nachvernetzung unter UV- oder Sonnenlicht. Dadurch geht der materialspezifische Vorteil des Polyacrylat durch dieses Verfahren verloren. Nachteilig ist zudem, dass UV-untransparente Füllstoffe nicht verwendet werden können. Auch bleibt verfahrensbedingt ein hoher Restmonomeranteil in diesen Produkten. Eine mögliche Restmonomerreduzierung durch Reduktion der Beschichtungsgeschwindigkeit oder durch intensive Nachtrocknung ist wenig wirtschaftlich. Die maximal erreichbare Schichtdicke ist sehr stark abhängig von der Wellenlänge des verwendeten Photoinitators. Herstellbar sich Schichten bis etwas 1 mm, allerdings mit den oben genannten Nachteilen. Noch dickere Schichten lassen sich praktisch nicht mehr gewinnen.

Besonders nachteilig bei Acrylatschichten, die durch zweistufige UV-Polymerisation, UV-Vernetzung oder durch Elektronenbestrahlung hergestellt werden, ist ein mehr oder weniger stark ausgeprägtes Vernetzungsprofil durch die Schicht hindurch. Zur Bestrahlungsquelle hin ist die UV-vernetzte Schicht immer stärker vernetzt als auf der der UV-Strahlungsquelle gegenüberliegenden Seite. Der Grad des Vernetzungsprofils ist z.B. abhängig von der Schichtdicke, der Wellenlänge des verwendeten Photoinitiators und auch der Wellenlänge der emittierten Strahlung der UV-Strahlungsquelle.

In den Schriften DE 198 46 902 A1 und DE 101 63 545 A1 wird vorgeschlagen, durch beidseitige ESH- (Elektronenstrahl-) bzw. UV-Bestrahlung das resultierende Vernetzungsprofil zu verringern und besonderes dicke UV-vernetzbare Acrylathaftklebeschichten nahezu homogen zu vernetzen. Allerdings weisen auch diese so hergestellten Schichten immer noch ein Vernetzungsprofi auf, und zudem ist das Verfahren sehr aufwendig. Weiterhin wäre es zur Herstellung viskoelastischer Acrylatträger kaum nutzbar, sondern beschreibt vor allem die Präparation von Haftklebeschichten.

Nachteilig an viskoelastischen Acrylatträgern, die ein Vernetzungsprofil durch die Schicht hindurch aufweisen, ist ihre ungenügende Fähigkeit, Spannungen gleichmäßig zu verteilen. Eine Seite ist immer entweder über- oder untervernetzt. Eine exakte Balance zwischen adhäsiven und kohäsiven Eigenschaften ist nie für die gesamte Schicht, sondern nur für einen kleinen Ausschnitt einstellbar.

Auch ESH-vernetzte Schichten weisen je nach Schichtdicke und Material immer ein Vernetzungsprofil auf. Auch bei ihnen ist die exakte Vernetzungseinstellung nicht möglich. Immerhin verläuft die ESH Vernetzung ohne zugesetzte Photoinitiatoren, so dass einige, aber nicht alle Nachteile, verglichen mit den UV-bestrahlten Schichten, abgestellt sind. Abhängig von der Beschleunigerspannung und der Dichte des zu durchstrahlenden Materials lässt sich die Dicke der durchstrahlten Schicht variieren. Schichtdicken oberhalb von etwa 500 $\mu$m, insbesondere wenn sie mit anorganischen Füllstoffen wie beispielsweise Glaskugeln gefüllt sind, lassen sich nicht mehr wirtschaftlich durchstrahlen. Die erzielbaren Schichtdicken sind hier somit nach oben begrenzt.

Aufgabe der Erfindung ist daher, ein Klebeband zur Verfügung zu stellen, welches eine viskoelastische Trägerschicht auf Acrylatbasis enthält, welches die erwähnten Nachteile nicht mehr aufweist und welches sich durch gute klebtechnische Eigenschaften, sehr gute Verankerung der Schichten untereinander auszeichnet und besonders als Montageklebeband genutzt werden kann. Das Klebeband soll durch die Trägerschicht hindurch gleich bleibende Eigenschaften besitzen, also insbesondere kein Vernetzungsprofil aufweisen.

Erfindungsgemäß wird die Aufgabe gelöst durch ein Klebeband aus einer viskoelastischen, Trägerschicht und zwei außenliegenden Klebeschichten, das dadurch gekennzeichnet ist, dass die Trägerschicht aus einem photoinitiatorfreien homogen vernetzten Polymer auf Acrylat- und/oder Methacrylatbasis besteht, die Schichtdicke des Klebebandes zwischen 300 und 10.000 $\mu$m beträgt und das Klebeband mit Herstellgeschwindigkeiten zwischen 0,5 m/min und 100 m/min nach einem Verfahren erhältlich ist, das die folgenden Schritte umfasst:

- Zusetzen zumindest eines thermischen Vernetzers zur Schmelze eines Polyacrylatcopolymers auf Basis von Acrylsäureestern und/oder Methacrylsäureestern,
- Fördern des mit dem Vernetzer versehenen Polyacrylatcopolymers zu einer Beschichtungseinheit,
- Einbringen des mit dem Vernetzer versehenen Polyacrylatcopolymers zwischen zwei jeweils vorbehandelte, flächig auf jeweils einen Liner beschichtete Klebemasseschichten,
- Vernetzung des Polyacrylatcopolymers nach der Beschichtung ohne Einfluss aktinischer Strahlung.

Bei der vernetzten Trägerschicht auf Polyacrylatbasis handelt es sich um eine solche, die viskoelastisch ist, also ein auf ein Substrat auffließendes Verhalten zeigt und gleichzeitig zumindest teilelastische Eigenschaften besitzt.

Eine bevorzugte Ausführungsform der Erfindung wird durch ein dreischichtiges Klebeband gegeben, welches als viskoelastischen Träger ein photoinitiatorfreies homogen thermisch vernetztes Acrylathotmelt enthält, der zumindest auf einer Seite, insbesondere beidseitig mit einer vorbehandelten, bevorzugt coronavorbehandelten Klebemasse bedeckt ist. Besonders bevorzugt ist die Trägerschicht mit den Klebemassenschichten durch chemische Reaktion verbunden. Zwischen der Trägerschicht und einer oder beiden Klebemassenschichten kann jeweils eine Sperrschicht vorgesehen sein, insbesondere um eine eventuelle Migration von Additiven oder chemischen Verbindungen zu verhindern. Bei verschiedenen vorteilhaften Ausgestaltungen des Klebebandes können die Merkmale der einzeln genannten Ausführungsformen der Erfindung auch miteinander kombiniert werden.

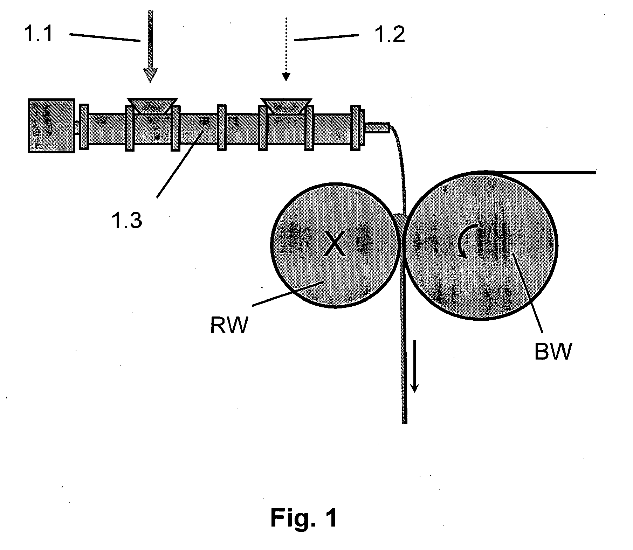

Vorteilhaft wird das erfindungsgemäße Klebeband, also insbesondere das dreischichtige Montageklebeband mit einem homogen vernetzten viskoelastischen Polyacrylatträger, nach dem im folgenden beschriebenen Verfahren erhalten: Einem Polyacrylatcopolymer (im folgenden einfach als "Polyacrylat" bezeichnet) auf Basis von Acrylsäureestern und/oder Methacrylsäureestern wird in der Schmelze zumindest ein thermischer Vernetzer zugesetzt wird, bevorzugt unter genauer Temperatur- und Zeitkontrolle. Das mit dem Vernetzer versehene Polyacrylat wird zu einer Beschichtungseinheit gefördert, besonders bevorzugt mit einem Extruder, noch mehr bevorzugt mit dem Compoundierungsextruder, in dem bereits der Vernetzer zugesetzt wurde und in dem ggf. bereits die Aufkonzentration des Polyacrylates stattgefunden hat; vgl. hierzu die schematische Darstellung in Figur 1; dabei bedeuten: 1.1 Polyacrylateingabe, 1.2: Vernetzerzugabe, 1.3: Extruder, RW: Rakelwalze; BW: Beschichtungswalze. An oder nach dieser Beschichtungseinheit wird das Material zwischen zwei jeweils vorbehandelte, bevorzugt coronavorbehandelte flächig auf jeweils ein Trägermaterial (auch als Liner bezeichnet; insbesondere silikonisierte Trennfolie oder Trennpapier) beschichtete Klebemasseschicht eingebracht. Bevorzugt ist die Beschichtung und das Laminieren mittels Zweiwalzen-, Mehrwalzen- oder Düsenbeschichtung, sehr bevorzugt mit der weiter unten dargestellten Beschichtungsanlage. Die Vernetzung des derart eingebrachten Polyacrylats findet in der Schicht statt, wobei insbesondere auch die dem Polyacrylat zugesetzten thermischen Vernetzer mit der vorbehandelten Grenzschicht reagieren. Dabei binden die Klebemassen chemisch an die entstehende viskoelastische Trägerschicht an. Hierdurch wird eine gute Verankerung von Trägermaterial (Polyacrylat) und Klebeschichten erreicht.

Die Zeit nach Zudosierung des Vernetzungssystems im Compoundieraggregat bis zum Ausformen der Polyacrylatmasse, die den Träger bildet, zwischen den insbesondere auf Liner beschichteten Klebemassen wird als Verarbeitungszeit bezeichnet. Innerhalb dieser Zeit kann die nun vernetzende viskoelastische Trägerschicht gelfrei und mit optisch gutem Strichbild beschichtet werden. Die Vernetzung erfolgt dann hauptsächlich nach der Beschichtung auf der Bahn unter milden Bedingungen, die weder Träger noch Liner schädigen, also insbesondere vorteilhaft ohne Einfluss aktinischer Strahlung wie zusätzlicher UV-Licht-Bestrahlung oder Elektronenstrahlen. Dabei entsteht eine homogen vernetzte Schicht, d.h. sie weist kein Vernetzungsprofil durch die Schicht hindurch auf.

Als Basismasse für die insbesondere viskoelastische Trägerschicht werden Polyacrylate verwendet, also Polymere auf Basis zumindest zum Teil von Acrylsäureestern und/oder Methacrylsäureestern.
Erfindungsgemäß bevorzugt enthält ein Teil der Acrylsäureester und/oder Methacrylsäureester primäre Hydroxygruppen. Der Anteil der primäre Hydroxygruppen enthaltenden Acryl- und/oder Methacrylsäureester beträgt in bevorzugter Vorgehensweise bis zu 25 Gew.-%, bezogen auf das Polyacrylat.
Es kann außerdem von Vorteil sein, wenn das Polyacrylat zum Teil einpolymerisierte Acrylsäure aufweist.

Für das erfindungsgemäße Verfahren zur Herstellung des Klebebandes wird als Basis den viskoelastischen Träger vorzugsweise ein Polyacrylat eingesetzt, welches auf die folgende Eduktmischung zurückgeführt werden kann:

a4) Acrylsäureester und/oder Methacrylsäureester der folgenden Formel

$$CH_2 = C(R^I)(COOR^{II})$$

wobei $R^I$ = H oder $CH_3$ und R'' eine Alkylkette mit 1 bis 20 C-Atomen ist, mit einem Anteil von 65 - 99 Gew.-%,
a5) Acrylate und/oder Methacrylate, deren Alkoholkomponente zumindest eine primäre Hydroxyl-Gruppe enthält, und/oder mit Acrylaten copolymerisierbare Vinylverbindungen, die zumindest eine primäre Hydroxyl-Gruppe enthalten, mit einem Anteil von 1 bis 20 Gew.-%,
a6) und, sofern sich die Anteile von a1) und a2) nicht zu 100 Gew.-% addieren, olefinisch ungesättigte Monomere mit funktionellen Gruppen, mit einem Anteil von 0 bis 15 Gew.-%.

Die Monomere werden bevorzugt dermaßen gewählt, dass die resultierenden Polymere eine Glasübergangstemperatur von - 40°C bis + 80 °C aufweisen, im Sinne einer dynamischen Glasübergangstemperatur für amorphe Systeme und der Schmelztemperatur für semikristalline Systeme verstanden, die durch dynamisch mechanische Analyse (DMA) bei geringen Frequenzen bestimmt werden können.

Zur Erzielung einer entsprechend bevorzugten Glasübergangstemperatur $T_G$ der Polymere von - 40 °C bis + 80 °C werden entsprechend dem vorstehend gesagten die Monomere sehr bevorzugt derart ausgesucht und die mengenmäßige Zusammensetzung der Monomermischung vorteilhaft derart gewählt, dass sich nach einer Gleichung (G1) in Analogie zur *Fox*-Gleichung (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad (G1)$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

In einer sehr bevorzugten Weise werden für a1) Acryl- oder Methacrylmomonere eingesetzt, die aus Acryl- und Methacrylsäureester mit Alkylgruppen aus 1 bis 20 C-Atomen bestehen, bevorzugt 4 bis 9 C-Atomen umfassen. Spezifische Beispiele, ohne sich durch diese Aufzählung einschränken zu wollen, sind Methacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, wie z.B. Isobutylacrylat, 2-Ethylhexylacrylat, 2-Ethylhexylmethacrylat, Isooctylacrylat, Isooctylmethacrylat. Weitere einzusetzende Verbindungsklassen für a1) sind monofunktionelle Acrylate bzw. Methacrylate von überbrückten Cycloalkylalkoholen, bestehend aus zumindestens 6 C-Atomen. Die Cycloalkylalkohole können auch substituiert sein, z.B. durch C-1-6-Alkylgruppen, Halogenatomen oder Cyanogruppen. Spezifische Beispiele sind Cyclohexylmethacrylate, Isobornylacrylat, Isobornylmethacrylate und 3,5-Dimethyladamantylacrylat.

In einer sehr bevorzugten Vorgehensweise werden für a2) Monomere eingesetzt, die Hydroxylgruppen, sehr bevorzugt primäre Hydroxylgruppen enthalten. Beispiel für a2) sind Hydroxyethylacrylat, Hydroxyethylmethacrylat, Hydroxypropylacrylat, Hydroxypropylmethacrylat, 6-Hydroxyhexylmethacrylat, 4-Hydroxystyrol, Allylalkohol wobei diese Aufzählung nicht abschließend ist.

Monomere für a3) sind z.B. olefinisch ungesättigte Monomere mit funktionellen Gruppen wie

Carboxylsäuregruppen, Säureanhydridgruppen, Phosphonsäuregruppen, Amid- oder Imid-oder Aminogruppen, Isocyanatgruppen, Epoxygruppen oder Thiolgruppen. Beispiele für a3) sind Acrylsäure oder Methacrylsäure, Maleinsäureanhydrid, Itaconsäureanhydrid, Itaconsäure, Glyceridylmethacrylat, Glycerylmethacrylat, Vinylessigsäure, β-Acryloyloxypro-pionsäure, Trichloracrylsäure, Fumarsäure, Crotonsäure, Aconitsäure, Acrylonitril Dimethylacrylsäure, N,N-Dialkylsubstituierte Amide, wie z.B. N,N-Dimethylacrylamid, N,N-Dimethylmethylmethacrylamid, N-tert.-Butylacrylamid, N-Vinlpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)methacrylamid, N-Methylolacrylamid, N-(Ethoxymethyl)acrylamid, N-Isopropylacrylamid, wobei diese Aufzählung nicht abschließend ist.

Als weitere hartmachende Comonomere können auch Makromomonere in das Polyacyrlat einpolymerisiert sein. Besonders geeignet sich Makromonomere, wie sie in der EP 1 361 260 A1 beschrieben werden, beispielsweise 2-Polystyrolethylmethacrylat mit einem Molekulargewicht Mw von 13.000 g/mol. Die bei Vernetzung resultierenden Makromonomermodifizierten thermisch vernetzten Acrylathotmelt sind scherfester, da sich physikalisch und thermisch vernetzt sind.

Für die erfindungsgemäße Weiterverarbeitung als Trägermaterial besonders geeignet sind die Polyacrylate, wenn sie durch Bulk-, Lösungs- oder Emulsionspolymerisation hergestellt werden und gegebenenfalls anschließend, insbesondere falls sie flüchtige Bestandteile einhalten, aufkonzentriert werden. Die Aufkonzentration kann zweckmäßigerweise in einem Entgasungsextruder durchgeführt werden, insbesondere analog der DE 102 21 402 A1, Seite 3, Zeile 22 - 68.

Die Polyacrylate haben in einer bevorzugten Vorgehensweise ein gewichtsmittleres Molekulargewicht $M_W$ von mindestens 300.000 g/mol bis maximal 1.500.000 g/mol. Die Bestimmung des mittleren Molekulargewichtes erfolgt über Größenausschlusschromatographie (GPC) oder Matrix-unterstützte Laser-Desorption/Ionisations-Massenspektrometrie (MALDI-MS). Es kann vorteilhaft sein, die Polymerisation in Gegenwart von Polymerisationsreglern wie Thiolen, Halogenverbindungen und insbesondere Alkoholen (Isopropanol) durchzuführen, um das gewünschte ein gewichtsmittlere Molekulargewicht $M_W$ einzustellen. Die Polymerisationszeit beträgt - je nach Umsatz und Temperatur - zwischen 2 und 72 Stunden.

Für die erfindungsgemäße Weiterverarbeitung besonders geeignet sind auch Polyacrylate, die eine enge Molekulargewichtsverteilung (Polydispersität < 4) haben. Diese Massen werden bei relativ niedrigem Molekulargewicht nach dem Vernetzen besonders scherfest. Da-im Vergleich zu einem normal verteilten Polyacrylat - bei einem eng verteilten Polyacrylat bei gleichem Kohäsionsniveau ein niedrigeres Molekulargewicht erforderlich ist, reduzieren sich Viskosität und Prozesstemperaturen. Somit ermöglicht ein eng verteiltes Polyacrylate eine besonders lange Verarbeitungszeit.

Eng verteilte Polyacrylate können durch anionische Polymerisation oder durch kontrollierte radikalische Polymerisationsmethoden hergestellt werden, wobei letzteres besonders gut geeignet ist. Beispiele sind in US 6,765,078 B2 und DE 10036901 A1 bzw. US 2004/0092685 A1 beschrieben. Auch die Atom Transfer Radical Polymerization (ATRP) lässt sich in vorteilhafter Weise zur Synthese eng verteilter Polyacrylate einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

Optional können der viskoelastische Acrylatschicht auch Weichmacher, Harze und Füllstoffe zugesetzt werden. Geeignete Füllstoffe sind hydrophile oder hydrophobe Kieselgele wie Aerosile oder Ultrasile, anorganische Füllstoffe wie Kreide, Titandioxid, Calcium- und Bariumsulfat aber auch organisch Füllstoffe wie Polymerkugeln oder Fasern auf Basis von Cellulose, Polyethylen, Polypropylen, Polyamid, Polyacrylonitril, Polyester, Polymethacrylat und/oder Polyacrylat.

Weiterhin können schwerentflammbare Füllstoffe, wie beispielsweise Ammoniumpolyphosphat, weiterhin elektrisch leitfähige Füllstoffe, wie beispielsweise Leitruß, Kohlenstofffasern und/oder silberbeschichtete Kugeln, weiterhin ferromagnetische Additive, wie beispielsweise Eisen-(III)-oxide, weiterhin Additive zur Herstellung geschäumter Schichten, wie beispielsweise Blähmittel, Glasvollkugeln, Glashohlkugeln, expandierbare Microballons, Alterungsschutzmitteln, Lichtschutzmitteln, Ozonschutzmitteln vor oder nach der Aufkonzentration des Polyacrylat zugegeben oder eincompoundiert werden.

Optional können die üblichen Weichmacher in Konzentrationen bis zu 3 Gew.-% zugesetzt werden. Als Weichmacher können z.B. niedermolekulare Polyacrylate, Phthalate, wasserlösliche Weichmacher, Weichharze, Phosphate oder Polyphosphate zudosiert werden.

Die Zugabe der Additive kann vor oder nach der Aufkonzentration des Polyacrylates geschehen.

Zur Herstellung dicker Trägerschichten können diese zusätzlich gefüllt und/oder geschäumt werden. Dazu werden dem Polyacrylat, bevorzugt vor dem Zusatz des thermischen Vernetzers, Glasvollkugeln, Glashohlkugeln oder expandierende Mikroballons zuzusetzen.

Erfindungsgemäß wird dem Polyacrylat ein thermischer Vernetzer zugesetzt. In einer sehr vorteilhaften Ausführungsform ist der zugesetzte thermische Vernetzer ein Isocyanat, bevorzugt ein trimerisiertes Isocyanat. In besonders bevorzugter Weise sind die trimerisierten Isocyanate aliphatische oder mit Aminen deaktivierte Isocyanate.

Geeignete Isocyanate sind insbesondere trimerisierte Derivate von MDI [4,4-Methylendi(phenylisocyanat)], HDI [Hexamethylendiisocyanat, 1,6-Hexylendiisocyanat] und/oder IPDI [Isophorondiisocyanat, 5-Isocyanato-1-isocyanatomethyl-1,3,3-trimethyl-cyclohexan], beispielsweise die Typen Desmodur® N3600 und XP2410 (jeweils BAYER AG: Aliphatische Polyisocyanate, niedrigviskose HDI-Trimerisate). Auch sehr gut geeignet ist die oberflächendeaktivierte Dispersion von mikronisiertem trimerisiertem IPDI BUEJ 339®, jetzt HF9 ® (BAYER AG).

Grundsätzlich zur Vernetzung geeignet sind aber auch andere Isocyanate wie Desmodur VL 50 (Polyisocyanate am MDI-Basis, Bayer AG), Basonat F200WD (aliphatisches Polyisocyante, BASF AG), Basonat HW100 (wasseremulgierbares polyfunktionelles Isocyanat auf HDI-Basis, BASF AG), Basonat HA 300 (allophanatmodifiziertes Polyisocyanat auf Isocyanurat. HDI-Basis, BASF) oder Bayhydur VPLS2150/1 (hydrophil modifiziertes IPDI, Bayer AG) wobei diese Aufzählung nicht abschließend ist.

Die Zugabe des thermischen Vernetzers zu dem Polyacrylat erfolgt in der Schmelze, bevorzugt unter genauer Temperatur- und Zeitkontrolle.

Die Zugabe und Einarbeitung des thermisch reaktiven Vernetzungssystems in die Polyacrylatmatrix erfolgt bevorzugt in kontinuierlich arbeitenden Compoundierungs-aggregaten. Diese Aggregate sind erfindungsgemäß so konzipiert, dass bei guter Durchmischung und gleichzeitig geringem Eintrag von Scherenergie eine kurze Verweilzeit der Masse nach der Dosierung des Vernetzungssystems gewährleistet wird. Vorzugsweise sind die Compoundierungsaggregate Extruder, insbesondere Doppelschnecken- und/oder Planetwalzenextruder. Dabei ist es besonders vorteilhaft, wenn die Spindeln des Extruders temperierbar und/oder kühlbar sind.

Vorteilhaft und zur Optimierung des Zeitfensters der Reaktion kann die Zugabe dabei in dem Extruder stattfinden, in dem bereits die Polyacrylatmasse aufkonzentriert wurde.

Die Zugabe der Vernetzer erfolgt an einer oder an mehreren Stellen der Aggregate, vorzugsweise in druckfreien Zonen. Günstig ist auch, wenn die thermisch reaktiven Vernetzersubstanzen fein verteilt dem Polyacrylat zugesetzt werden, beispielsweise als Aerosol, in feinen Tröpfchen oder verdünnt in einem geeigneten Verdünnungsmittel wie einem polymerverträglichen Weichmacher.

Vorteilhaft beträgt der Restmonomergehalt im Polyacrylat für die Trägerschicht bei Zugabe des thermischen Vernetzers nicht mehr als 1 Gew.-%, insbesondere nicht mehr als 0,3 Gew.-%, bezogen auf das Polyacrylat.

Vorteilhaft beträgt der Restlösemittelgehalt im Polyacrylat für die Trägerschicht nach Aufkonzentration und bei Zugabe des thermischen Vernetzers nicht mehr als 1 Gew.-%, insbesondere nicht mehr als 0,3 Gew.-%, bezogen auf das Polyacrylat.

Bevorzugt geht man vor, indem man den thermischen Vernetzer, insbesondere das trimerisierte Isocyanat, zu 0,1 bis 5 Gew.-%, insbesondere zu 0,2 bis 1 Gew.-%, bezogen auf das Polyacrylat, einsetzt.

Bei einer vorteilhaften Weiterentwicklung des erfindungsgemäßen Verfahrens beträgt die Temperatur des Polyacrylats für die Trägerschicht bei der Zugabe des thermischen Vernetzers zwischen 60 °C und 120 °C, besonders bevorzugt zwischen 70 °C und 100 °C.

Die mit dem Vernetzer versetzte Polyacrylatschmelze wird zu einer Beschichtungseinheit transportiert, vorzugsweise direkt durch den Extruder, in dem die Zugabe des Vernetzers und ggf. bereits die Aufkonzentration der Masse bereits stattgefunden hat. Dort werden auf beide Seiten der anvernetzten, also noch nicht vollständig vernetzten viskoelastischen Trägerschicht vorbehandelte, insbesondere coronavorbehandelte Haftklebeschichten zukaschiert. Dabei können reaktive Isocyanatgruppen in der Trägerschicht mit den Hydroxyfunktionalitäten der zukaschierten Haftklebeschichten reagieren. Dadurch wird die Vernetzung positiv beeinflusst. Auch sonst sehr schlecht zu verankernde Massen lassen sich so an die viskoelastische Trägerschicht anbinden.

Als Klebemassenschichten des erfindungsgemäßen Klebebandes sind prinzipiell alle Arten von Klebemassen geeignet, die auf dem Träger verankert werden können.

Im erfindungsgemäßen Sinne sehr bevorzugt werden Haftklebemassen eingesetzt. In einer bevorzugten Vorgehensweise wird beidseitig eine vorbehandelte, insbesondere Coronavorbehandelte Polyacrylatschicht zukaschiert. Es können auch nach anderen Verfahren vorbehandelte Klebeschichten, insbesondere auf Acrylatbasis, verwendet werden, sofern bei diesen Klebemassen funktionelle Gruppen vorhanden sind und/oder durch die Vorbehandlung gebildet werden, die mit Isocyanatgruppen chemische Bindungen eingeben. Besonders bevorzugte Haftklebemassen sind Reinacrylatmassen oder solche, die keine migrierfähigen Komponenten wie Harze oder Weichmacher in nennenswerter Konzentration enthalten.

Im erfindungsgemäßen Sinne sehr bevorzugt sind Reinacrylathaftklebemassen, die zuvor auf silikonisierte Polyesterliner beschichtet wurden.

Geeignet sind neben Haftklebemassen auch Schmelzklebestoffschichten oder hitzeaktivierbare Schichten, die bevorzugt einseitig der viskoelastischen Schicht zukaschiert werden. Dadurch erhält man Produkte mit asymmetrischem Aufbau.

Beispiele für geeignete Basispolymere für Klebemassen (sowohl im Sinne von Haftklebemassen als auch im Sinne anderer Klebemassen) sind Naturkautschuk, Synthesekautschuke, Acrylatblockcopolymere, Styrolblockcopolymere, EVA, viele Polyolefine, Polyurethane, Polyvinylether, und Silikone.

Bevorzugt sind Klebemassen, die keine nennenswerten Anteile an migrierfähigen Bestandteilen haben, die mit dem Polyacrylat der Trägerschicht so gut verträglich sind, dass sie in diese in signifikanter Menge einwandern könnten.

Beispiele erfindungsgemäß sehr geeigneter Haftklebeschichten sind in der EP 1 308 492 A beschrieben (Seite 27, Zeile 23 bis Seite 12, Zeile 56).

Die auf Trennmaterial beschichteten Klebemassen, bevorzugt Haftklebemassen, können mit allen bekannten physikalischen oder chemischen Verfahren vorbehandelt werden, mit denen reaktive Gruppen gebildet werden, die mit Isocyanaten reagieren können. Ebenso können alle bekannten Methoden der Primerung eingesetzt werden, wobei die Primerschichten sowohl aus Lösungen oder aus Dispersionen heraus auf die Klebeschichten aufgetragen werden können. Die Auftragung kann auch im Extrusions- oder Coextrusionsverfahren geschehen. Bevorzugte physikalische Methoden sind Flammverbehandlung, Coronavorbehandlung, atmosphärische Plasmavorbehandlung oder Vakuumplasmabehandlung. Sehr bevorzugt ist die Coronavorbehandlung direkt vor dem Zukaschieren der noch reaktiven viskoelastischen Trägerschicht.

In einigen Fällen, insbesondere bei Verwendung von Haftklebemassen mit migrationsfähigen Bestandteilen wie Styrolblockcopolymeren oder Kautschuk, kann die Verwendung einer Sperrschicht, beispielsweise aus Polyamid, sinnvoll sein. Aber auch andere Materialien, die diesen Zweck erfüllen, sind zulässig. Zur Herstellung eines doppelseitig klebenden Montageklebebandes wird dann vorteilhaft entweder die Sperrschicht auf eine zuvor auf ein Trennmaterial beschichtete Klebemasse aufgebracht, dann sperrschichtseitig nach den oben beschriebenen Methoden vorbehandelt und zur noch reaktiven viskoelastischen Trägerschicht kaschiert. Alternativ kann die Sperrschicht auf die viskoelastische Trägerschicht aufgebracht und anschließend mit der Klebemasse beschichtet werden.

Direkt nach der Beschichtung mittels Walzenauftrag oder Extrusionsdüse ist die viskoelastische Trägerschicht nur anvernetzt, aber noch nicht ausreichend vernetzt. Beschichtung heißt in diesem Zusammenhang das Ausformen der mit Vernetzer abgemischten, weitestgehend lösungsmittelfreien Trägermasse in entsprechende Schichten und Auftragen zwischen die auf bahnförmiges Material ausgebrachten vorbehandelten Klebeschichten. Der Vernetzungsgrad zu diesem Zeitpunkt darf also nur soweit fortgeschritten sein, dass die Verarbeitbarkeit der Haftklebemasse, insbesondere in Hinblick auf ein gutes Beschichtungsbild, noch gewährleistet ist.

Die Verarbeitungszeit beträgt 3 - 30 Minuten, bevorzugt 5 - 20 Minuten, besonders bevorzugt 5 - 10 Minuten.

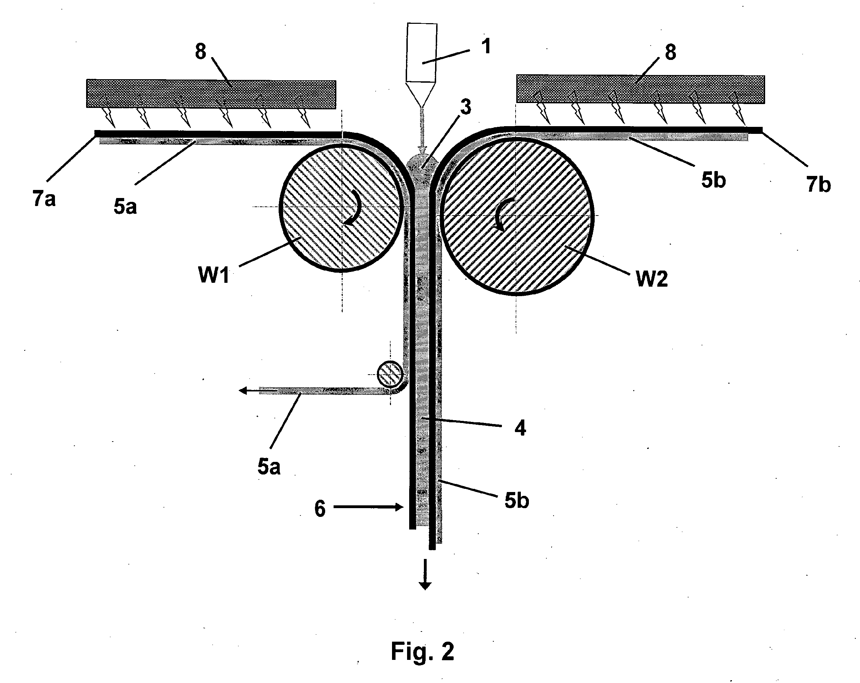

Der Aufbau des Dreischichtensystems Klebemasse-Polyacrylatträger-Klebemasse erfolgt bevorzugt über eine Zweiwalzenanlage (vgl. hierzu Fig. 2). Mittels einer Verteilerdüse (1) oder einer anderen geeigneten Einheit wird die mit dem Vernetzer und ggf. mit Füllstoffen fertig compoundierte viskoelastische Masse (3), die das spätere Trägermaterial bildet, dem Walzenspalt zugeführt und dort zwischen die beiden Klebemassenschichten (7a, 7b), die zuvor einer Vorbehandlung, insbesondere einer Corona-Behandlung (8) unterzogen wurden (bevorzugt einzustellende Coronaleitung: 10 bis 200 W min / m$^2$, bevorzugt 30 - 160 W min / m$^2$, sehr bevorzugt 80 - 120 W min / m$^2$), eingebracht. Die insbesondere auf anti-adhäsiv ausgerüstete Hilfsträger (5a, 5b) beschichteten Klebemassen werden dabei über die Walzen W1 und W2 in die Apparatur eingebracht, und zwar derart, dass die Klebemassenseiten einander zugewandt sind.

Die Ausformung der viskoelastischen Masse zu einem viskoelastischen Film erfolgt zwischen den Kalanderwalzen W1 und W2 im Walzenspalt, dabei kommt es gleichzeitig zur Beschichtung mit den beiden zugeführten Klebemassen (7a, 7b). Die Vorbehandlung der Klebemassen, insbesondere innerhalb einer Corona-Station (8), dient der besseren Verankerung der Klebemassen auf der ausgeformten, viskoelastischen Trägerschicht. Durch diese Behandlung entstehen aktive OH-Gruppen an der Oberfläche der Klebemassen, die nach der Herstellung des Dreischichtverbundes zu einer verbesserten chemischen Anbindung an die viskoelastische Trägerschicht führen.

Durch die Breite des Walzenspalts und den Druck der Walzen wird dabei die Schichtdicke des Trägers bestimmt.

Das vorstehend dargestellte Verfahren eignet sich insbesondere zur Herstellung von viskoelastischen Dreischichtaufbauten mit Schichtdicken zwischen 100 $\mu$m und 10.000 $\mu$m, bevorzugt zwischen 300 $\mu$m und 5.000 $\mu$m, mit Herstellgeschwindigkeiten zwischen 0,5 m/min und 100 m/min.

Die Oberflächentemperaturen der Walzen werden abhängig von den verwendeten viskoelastischen Massen und anti-adhäsiven Trägermaterialen bevorzugt zwischen 25 °C und 200 °C, mehr bevorzugt zwischen 60 °C und 150 °C und besonders bevorzugt zwischen 80 °C und 120 °C eingestellt. Als Oberflächen für die beiden verwendeten Kalanderwalzen eignen sich alle dem Fachmann geläufigen Materialien wie Stahl, verchromter Stahl, rostfreier Stahl, Kunststoffe, Silikone, Keramiken sowie Kombinationen aus den genannten Materialien.

Erstaunlicher Weise und für den Fachmann überraschend ist, dass sich der im Walzenspalt rotierende Massewulst nicht mit den zugeführtem Klebemassen vermischt. Zu erwarten gewesen wäre, dass sich die Klebemasse zumindest teilsweise vom anti-adhäsiv ausgerüsteten Träger löst und mit dem rotierenden Massewulst vermischt.

Die Vernetzungsreaktion, insbesondere mit Isocyanaten, verläuft bevorzugt ohne Katalyse. Bei funktionalisierten Acrylatcopolymeren, die keine einpolymerisierte Acrylsäure enthalten, verläuft die Reaktion bevorzugt mit aromatischen und/oder aliphatischen Isocyanaten bei leicht erhöhten Temperaturen. Bei funktionalisierten Acrylatcopolymeren, die einpolymerisierte Acrylsäure enthalten, ist die Reaktionsgeschwindigkeit schneller. Hier gelingt ein prozessstabiler Prozess bevorzugt mit den langsamer reagierenden aliphatischen Isocyanaten oder oberflächendeaktivieren Isocyanatemulsionen.

Die Vernetzungsreaktion verläuft auch ohne Wärmezufuhr bei Normalbedingungen (Raumtemperatur) vollständig ab. In der Regel ist nach einer bis zu 14-tägigen, insbesondere einer vier- bis zehntägigen Lagerung die Vernetzungsreaktion mit dem multifunktionalisiertem Isocyanat weitestgehend abgeschlossen und die endgültige Kohäsion der Masse erreicht. Gleichzeitig bindet dadurch die viskoelastische Trägerschicht chemisch an die zukaschieren Klebstoffdeckschichten an.

Durch die Vernetzung mit Isocyanaten bilden sich Urethangruppen aus, die die Polymerketten verknüpfen. Durch die Verknüpfung erhöhen sich die Kohäsion der viskoelastischen Trägerschicht und damit die Scherfestigkeit des Produktes.

Die physikalischen Eigenschaften des viskoelastischen Trägers und des Endproduktes, insbesondere dessen Viskosität, Auffließverhalten, Wärmebeständigkeit, Scherfestigkeit, können neben den gewählten Comonomeren und ggf. Füllstoffen durch den Grad der Vernetzung beeinflusst werden, so dass sich durch geeignete Wahl der Reaktionsbedingungen das Endprodukt optimieren lässt. Diverse Faktoren bestimmen das Prozessfenster dieses Verfahrens. Die wichtigsten Einflussgrößen sind, besonders bei unabgemischten Systemen, Prozess- und Beschichtungstemperatur, Verweilzeit in Compoundierextruder und Beschichtungsaggregat, Vernetzertyp (deaktiviert, aliphatisch, aromatisch), Vernetzerkonzentration, Anteil an Hydroxygruppen im Polymer, Anteil an copolymerisierten Säuregruppen im Polymer sowie das mittlere Molekulargewicht des Polyacrylats.

Im Folgenden werden einige Zusammenhänge bei der Herstellung des erfindungsgemäßen Polyacrylats beschrieben, die das Verfahren zur Herstellung optimieren, aber nicht einschränkend für den erfindungsgemäßen Gedanken sind:

Bei gleich bleibender Vernetzerkonzentration führt eine Erhöhung der Prozesstemperatur zu einer verringerten Viskosität, dies verbessert die Beschichtbarkeit der viskoelastischen Masse, reduziert jedoch die Verarbeitungszeit. Eine Erhöhung der Verarbeitungszeit erhält man durch Verringerung der Vernetzerkonzentration, Erniedrigung des Molekulargewichts, Verringerung der Konzentration an Hydroxygruppen im Polymer, Verringerung des Säureanteils im Polymer, Verwendung von weniger reaktiven Isocyanaten und Verringerung der Prozesstemperatur. Eine Kohäsionsverbesserung der viskoelastischen Masse kann man durch unterschiedliche Wege erhalten. Entweder wird die Vernetzerkonzentration erhöht, was die Verarbeitungszeit reduziert. Man kann bei gleich bleibender Vernetzerkonzentration auch das Molekulargewicht des Polyacrylats erhöhen, was möglicherweise effizienter ist. Je nach gewünschtem Anforderungsprofil der Masse bzw. des Produktes müssen die oben genannten Parameter in geeigneter Weise angepasst werden.

Im Falle der Verwendung von expandierenden Mikroballons bei der Herstellung geschäumter Schichten wird die Masse bzw. die ausgeformte Schicht vorteilhaft in geeigneter Weise mittels Wärmeeintrag aktiviert. Zu dieser geschäumten Schicht kann dann beidseitig bevorzugt eine Corona-vorbehandelte Polyacrylatschicht zukaschiert werden. Zweckmäßigerweise wird die geschäumte Schicht durch das Zukaschieren der corono-vorbehandelten Haftklebeschichten oder separat beispielsweise durch Walzen geglättet.

Das erfindungsgemäße Klebeband zeigt durch die Kombination der Träger- und Klebmasserezepturen hervorragende Eigenschaften, die derartig für den Fachmann nicht vorherzusehen waren, so dass dessen Verwendung insbesondere als Montageklebeband für Hochleistungsanforderungen möglich ist. Dies gilt besonders auch für die Ausgestaltung als Selbstklebeband. Die erfinderischen Vorteile sind insbesondere bei Anwendungstemperaturen zwischen 100 und 130 °C signifikant. Darüber hinaus ist wegen der sehr guten Verankerung und homogenen Vernetzung die Weichmacherbeständigkeit überragend. Die Verklebungsfestigkeit auf weichmacherhaltigen Substraten bleibt auch nach Lagerung hoch, die Verankerung der Schichten untereinander sehr gut. Ein Delaminieren der Schichten wird auch nach Lagerung gegen weichmacherhaltige Substrate nicht beobachtet.

Aufgrund der hohen Flexibilität des Trägers passt sich das Klebeband sehr gut unebenen Untergründen an. Es entsteht eine dauerhafte Verbindung zwischen Klebeband und Untergrund, die auch bei hohen Scherkräften und Biegemomentbeanspruchungen, selbst bei hohen Temperaturen und auch nach Lagerung unter UV-Bestrahlung und Feuchte nicht versagt.

Verwendet werden kann ein derartiges Klebeband zum Beispiel in der Möbelindustrie, wo Spiegel, Leisten oder Blenden dauerhaft verklebt werden sollen. Wegen der hervorragenden Produkteigenschaften ist der Einsatz auch in vielen Industriebereichen als Montagematerial vorteilhaft, wenn unterschiedliche Oberflächen, insbesondere UV-durchlässige, wie Fensterglas oder transparente Kunststoffe, dauerhaft miteinander zu verkleben sind.

Durch die homogene Vernetzung durch die Schicht hindurch ist die klebtechnische Performance auf jeder Seite gleichermaßen gut. Bei gleichen angrenzenden Klebemassenschichten und gleichen Oberflächenstrukturen sind auch die klebtechnischen Eigenschaften der jeweiligen Seiten gleich. Die viskoelastischen Träger zeigen kein Vernetzungsprofil durch die Schicht hindurch.

Mit dem erfindungsgemäßen Verfahren ist es weiterhin möglich, sehr dicke Klebebänder anzubieten. Die viskoelastische Trägerschicht kann besonders dick sein, denn prinzipiell zeigt dieses Verfahren keine Schichtdickenbegrenzung im Gegensatz zu Vernetzungen über UV oder ESH-Bestrahlung. Insbesondere können auch gefüllte und geschäumte viskoelastische Schichten hergestellt werden. Dazu ist es sinnvoll, dem Polyacrylat vor dem Zusatz des thermischen Vernetzers Glasvollkugeln, Glashohlkugeln oder expandierende Mikroballons zuzusetzen. Im Falle der Verwendung von expandierenden Mikroballons wird bevorzugt die Masse bzw. die ausgeformte Schicht in geeigneter Weise mittels Wärmeeintrag aktiviert. Zu dieser geschäumten Schicht kann dann beidseitig bevorzugt eine Corona-vorbehandelte Polyacrylatschicht zukaschiert werden. Zweckmäßigerweise wird die geschäumte Schicht durch das Zukaschieren der coronovorbehandelten Klebeschichten oder separat beispielsweise zwischen zwei Walzen geglättet.

Es können beliebig gefüllte und gefärbte Schichten erhalten werden. Zudem ist der Restmonomergehalt der viskoelastischen Schichten, wie auch des gesamten dreischichtigen Produkts sehr gering. Besonders vorteilhaft ist die Möglichkeit, den homogen vernetzten viskoelastischen Acrylatträger des dreischichtigen doppelseitig mit Klebstoff ausgerüsteten Klebebandes mit Beschichtungsgeschwindigkeiten von oberhalb 50, bevorzugt 100 m/min herstellen zu können.

Für bestimmte Anwendungen kann das dann als Zwischenprodukt vorliegende erfindungsgemäße Klebeband durch zusätzliche Bestrahlung mittels aktinischer Strahlung (beispielsweise UV-Licht oder Elektronenstrahlen) weiter den Erfordernissen angepasst bzw. verbessert werden.

**Beispiele**

Die folgenden beispielhaften Experimente sollen die Erfindung näher erläutern, ohne dass durch die Wahl der angegebenen Beispiele die Erfindung unnötig eingeschränkt werden soll.

Testmethoden:

Feststoffgehalt:

Der Feststoffgehalt ist ein Maß für den Anteil an nicht Verdampfbaren in einer Polymerlösung. Er wird gravimetrisch bestimmt, indem man die Lösung einwiegt, dann für 2 Stunden bei 120°C im Trockenschrank die verdampfbaren Anteile abdampft und den Rückstand zurückwiegt.

K-Wert (nach FIKENTSCHER):

Der K-Wert ist ein Maß für die durchschnittliche Molekülgröße hochpolymerer Stoffe. Zur Messung wurden einprozentige (1g/100 ml) toluolische Polymerlösungen herstellt und mit Hilfe eines VOGEL-OSSAG-Viskositmeters deren kinematische Viskositäten bestimmt. Nach Normieeung auf die Viskosität des Toluols wird die relative Viskosität erhalten, aus der sich nach FIKENTSCHER der K-Wert errechnen lässt (Polymer 8/1967, 381 ff.)

Gelpermeationschromatographie GPC

Die Bestimmung des mittleren Molekulargewichtes $M_W$ und der Polydisperistät PD erfolgte durch die Firma Polymer Standards Service in Mainz. Als Eluent wurde THF mit 0.1 Vol.-% Trifluoressigsäure eingesetzt. Die Messung erfolgte bei 25°C. Als Vorsäule wurde PSS-SDV, 5 $\mu$, $10^3$ Å, ID 8.0 mm x 50 mm verwendet. Zur Auftrennung wurden die Säulen PSS-SDV, 5 $\mu$, $10^3$ sowie $10^5$ und $10^6$ mit jeweils ID 8.0 mm x 300 mm eingesetzt. Die Probenkonzentration betrug 4 g/l, die Durchflußmenge 1.0 ml pro Minute. Es wurde gegen PMMA-Standards gemessen.

90° Klebkraft Stahl (offene und abgedeckte Seite)

Die Bestimmung der Klebkraft Stahl erfolgt bei einem Prüfklima von 23 °C +/- 1 °C Raumtemperatur und 50 % +/- 5 % rel. Luftfeuchte. Die Muster wurden auf 20 mm Breite zugeschnitten und auf eine Stahlplatte geklebt. Die Stahlplatte muss vor der Messung gereinigt und konditioniert werden. Dazu wird die Platte zunächst mit Aceton abgewischt und danach 5 Minuten an der Luft liegen gelassen, damit das Lösungsmittel abdampfen kann. Die dem Prüfuntergrund abgewandte Seite des Transfertapes wurde dann mit einer 50 $\mu$m Aluminiumfolie abgedeckt was verhindert, dass sich das Muster bei der Messung dehnt. Danach erfolgte das Anrollen des Prüfmusters auf den Stahluntergrund. Hierzu wurde das Tape mit einer 2 kg Rolle 5 mal hin und her, bei einer Aufrollgeschwindigkeit von 10 m/min, überrollt. Unmittelbar nach dem Anrollen wurde die Stahlplatte in eine spezielle Halterung geschoben, die es ermöglicht das Muster in einem Winkel von 90 °C senkrecht nach oben abzuziehen. Die Klebkraftmessung erfolgte mit einer Zwick-Zugprüfmaschine. Beim Applizieren der abgedeckten Seite auf die Stahlplatte wird die offene Seite des Transfertapes zunächst gegen die 50 $\mu$m Aluminiumfolie kaschiert, das Trennmaterial entfernt und auf die Stahlplatte geklebt, analog angerollt und vermessen.

Die Messergebnisse beider Seiten, offen und abgedeckt, sind in N/cm angegeben und sind gemittelt aus drei Messungen.

Scherstandzeit (offene_und abgedeckte Seite)

Die Musterpräparation erfolgte in einem Prüfklima von 23 °C +/- 1 °C Raumtemperatur und 50 % +/- 5 % rel.

Luftfeuchte. Das Prüfmuster wurde auf 13 mm zugeschnitten und auf eine Stahlplatte geklebt. Die Verklebungsfläche beträgt 20 mm x 13 mm (Länge x Breite). Vor der Messung wurde die Stahlplatte gereinigt und konditioniert. Dazu wird die Platte zunächst mit Aceton abgewischt und danach 5 Minuten an der Luft liegen gelassen, damit das Lösungsmittel abdampfen kann. Nach dem Verkleben wurde die offene Seite mit einer 50 $\mu$m Aluminiumfolie verstärkt und mit einer 2 kg Rolle 2 mal hin und her überrollt. Anschließend wurde eine Gurtschlaufe am überstehenden Ende des Transfertapes angebracht. Das Ganze wurde dann an einer geeigneten Vorrichtung aufgehängt und mit 10 N belastet. Die Aufhängvorrichtung ist so beschaffen, dass das Gewicht die Probe in einem Winkel von 179 °+/- 1 ° belastet. Dadurch ist sichergestellt, dass sich das Transfertape nicht von der Plattenunterkante abschälen kann. Die gemessene Scherstandzeit, die Zeit zwischen Aufhängen und Abfallen des Musters, ist in Minuten angegeben und entspricht dem Mittelwert aus drei Messungen. Zur Messung der abgedeckten Seite wird die offene Seite zunächst mit der 50 $\mu$m Aluminiumfolie verstärkt, das Trennmaterial entfernt und auf die Prüfplatte analog der Beschreibung geklebt. Die Messung wird bei Normalklima (23°C, 55 % Luftfeuchtigkeit) durchgeführt.

Rolling Ball Tack (offene und abgedeckte Seite)

Mittels Rolling Ball Test wurde der Tack der Muster bei sehr kurzer Kontaktzeit gemessen. Die Messung erfolgte in einem Prüfklima von 23 °C +/- 1 °C Raumtemperatur und 50 % +/-5 % rel. Luftfeuchte. Das Transfertape wurde mit der zu prüfenden Seite nach oben unter leichter Spannung auf der exakt waagerecht ausgerichteten Arbeitsplatte fixiert. Anschließend wurde eine 65 mm hohe Rampe auf den Musterstreifen gestellt und eine saubere, mit Aceton gereinigte und 5,6 g schwere Kugel heruntergerollt. Die Strecke zwischen der Vorderkante der Rampe und dem Kugelmittelpunkt der ausgerollten Kugel wurde gemessen. Angegeben ist der Mittelwert aus 5 Messungen pro Seite.

SAFT-Shear Adhesive Failure Temperatur (offene und abgedeckte Seite)

Der SAFT-Test ist eine Schnellprüfung der Kurzzeittemperaturbeständigkeit der TransferDer SAFT-Test ist eine Schnellprüfung der Kurzzeittemperaturbeständigkeit der Transfertapes. Die Muster wurden mit einer 50 $\mu$m Alu-minumfolie verstärkt und verbleibene Klebeseite auf eine geschliffene, mit Aceton gereinigte Stahl-Prüfplatte verklebt und anschließend mit einer 2 kg-Stahlrolle und einer Geschwindigkeit von 10 m/min sechsmal überrollt. Die Verklebungsfläche der Probe betrug, Höhe x Breite, 13 mm x 10 mm. Der obere Teil des Musters, der die Prüfplatte um 2 mm überragt, wurde mit einem stabilen Klebestreifen verstärkt. Dort wurde, nachdem die Probe senkrecht aufgehängt wurde, der Wegemessfühler aufgelegt.
Die zu messende Probe wurde am unteren Ende mit einem Gewicht von 50 g belastet. Die Stahl-Prüfplatte mit der verklebten Probe wurde dann, beginnend bei 25 °C, mit einer Rate von 9 °C pro Minute auf die Endtemperatur von 200 °C aufgeheizt. Gemessen wurde der Rutschweg der Probe mittels Wegmessfühler in Abhängigkeit von Temperatur und Zeit. Beendet wurde die Messung bei Erreichen der vorgesehenen Endtemperatur oder bei Erreichen einer Rutschstrecke von > 1000 $\mu$m.
Der SAFT-Test kann zwei Prüfmerkmale liefern: SAFT-Scherweg oder SAFT-Kurzzeittemperaturbeständigkeit. Der SAFT-Scherweg ist die Rutschstrecke in $\mu$m bei Erreichen der Endtemperatur. Die SAFT-Kurzzeittemperaturbeständigkeit ist die Temperatur, bei der eine Rutschstrecke von 1000 $\mu$m erreicht wird. Es wurden beide Seiten gemessen; die offene und die abgedeckte Seite. Angegeben ist jeweils der Mittelwert einer Doppelbestimmung.

Wandhakentest

Figur 3 zeigt die Herstellung der Polyacrylathaftklebeschichten (Schicht A und/oder C). Ein zwischen zwei polierten Stahlplatten (3.2) fixiertes Prüfmuster (3.1) der Größe 30 mm x 30 mm wird 1 Minute lang mit 0,9 kN angedrückt (Kraft P). Danach wird ein 9 cm langer Hebelarm (3.3) in die oberste Stahlplatte eingeschraubt und dieser anschließend mit einem 1000 g Gewicht (3.4) belastet. Es wird darauf achtgegeben ,dass die Zeit zwischen Andrücken und Belasten nicht mehr als zwei Minuten beträgt (t $\leq$ 2 min).
Gemessen wird die Haltezeit, d.h. die Zeit zwischen dem Aufhängen und Abfallen des Musters. Als Ergebnis wird die Haltezeit in Minuten als Mittelwert einer Dreifachbestimmung angegeben. Das Prüfklima beträgt 23 °C +/- 1 °C und 50 % r.F. +/- 5 % r.F (r.F. relativer Feuchte).
Es wurde jeweils die offene und die abgedeckte Seite gemessen.

Polyacrylathaftkleber 1 (PA1):

Ein für radikalische Polymerisationen konventioneller 100 L-Glasreaktor wurde mit 2,8 kg Acrylsäure, 8,0 kg Methylacrylat, 29,2 kg 2-Ethylhexylacrylat und 20,0 kg Aceton/Isopropanol (95:5) befüllt. Nach 45 Minuten Durchleiten von Stickstoffgas unter Rühren wurde der Reaktor auf 58 °C hochgeheizt und 20 g Azoisobutyronitril (AIBN, Vazo 64®, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 20 g AIBN hinzugegeben. Nach 4 und 8 h wurde mit jeweils 10,0 kg Aceton/Isopropanol (95:5) Gemisch verdünnt. Zur Reduktion der Restinitiatoren wurden nach 8 und nach 10 h jeweils 60 g Bis-(4-tert.-Butylcyclohexanyl)-Peroxy-dicarbonat (Perkadox 16®, Fa Akzo Nobel) hinzugegeben. Die Reaktion wurde nach 24 h Reaktionszeit abgebrochen und auf Raumtemperatur abgekühlt. Anschließend wurde das Polyacrylat mit 0,4 Gew.-% Aluminium-(IIII)-acetylacetonat (3 %ige Lösung Isopropanol) abgemischt, auf einen Feststoffgehalt von 30 % mit Isopropanol verdünnt und dann aus Lösung auf eine silikonisierte Trennfolie (50 $\mu$m Polyester) beschichtet. (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C) betrug der Masseauftrag 50 g/m$^2$.

Polyacrylathaftkleber 2 (PA2):

Ein für radikalische Polymerisationen konventioneller 100 L-Stahlreaktor wurde mit 4,0 kg Acrylsäure, 36,0 kg 2-Ethylhexylacrylat und 13,3 kg Aceton/Isopropanol (96:4) befüllt. Nach 45 Minuten Durchleiten von Stickstoffgas unter Rühren wurde der Reaktor auf 58 °C hochgeheizt und 20 g Azoisobutyronitril (AIBN, Vazo 64®, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 20 g AIBN hinzugegeben. Nach 4 und 8 h wurde mit jeweils 10,0 kg Aceton/Isopropanol (96:4) Gemisch verdünnt. Zur Reduktion der Restinitiatoren wurden nach 8 und nach 10 h jeweils 60 g Bis-(4-tert.-Butylcyclohexanyl)-Peroxy-dicarbonat (Perkadox 16®, Fa Akzo Nobel) hinzugegeben. Die Reaktion wurde nach 24 h Reaktionszeit abgebrochen und auf Raumtemperatur abgekühlt. Anschließend wurde das Polyacrylat mit 0,4 Gew.-% Aluminium-(IIII)-acetylacetonat (3 %ige Lösung Isopropanol) abgemischt, auf einen Feststoffgehalt von 30 % mit Isopropanol verdünnt und dann aus Lösung auf eine silikonisierte Trennfolie (50 $\mu$m Polyester) beschichtet. Nach Trocknung (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C) betrug der Masseauftrag 50 g/m$^2$.

B. Herstellung der viskoelastischen Träger

Herstellung der Ausgangspolymere für die viskoelastischen Träger der Beispiele VT 1 bis 6 Im Folgenden wird die Präparation der Ausgangspolymere beschrieben. Die untersuchten Polymere werden konventionell über eine freie radikalische Polymerisation in Lösung hergestellt.

    HEMA = Hydroxyethylmethacrylat
    AIBN = [2,2'-Azobis(2-methylbutyronitril)]
    Perkadox 16 = Bis-(4-t-Butylcyclohexyl)peroxidicarbonat

Basispolymer 1 (B1)

Ein für radikalische Polymerisationen konventioneller Reaktor wurde mit 27 kg 2-Ethylhexylacrylat, 27 kg n-Butylacrylat, 4,8 kg Methylacrylat, 0,6 kg Acrylsäure, 0,6 kg HEMA und 40 kg Aceton/Isopropanol (93:7) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h wurden erneut 30 g AIBN zugegeben und nach 4 h wurde mit 10 kg Aceton/Isopropanol Gemisch verdünnt.
Nach 5 sowie nach 7 h wurde jeweils mit 90 g Perkadox 16 nachinitiiert. Nach 22 h Reaktionszeit wurde die Polymerisation abgebrochen und auf Raumtemperatur abgekühlt. Das Polyacrylat hat einen K-Wert von 69, einen Feststoffgehalt von 54,6 %, ein mittleres Molekulargewicht von Mw = 819000 g/mol, Polydispersität (Mw/Mn) = 7,6

Basispolymer 2 (B2)

Analog Beispiel 1 wurden 36,0 kg 2-Ethylhexylacrylat, 21,0 kg tert.-Butylacrylat, 2,4 kg Acrylsäure und 0,6 kg HEMA in 40 kg Aceton/Isopropanol (93:7) polymerisiert. Initiiert wurde zweimal mit jeweils 30 g AIBN, zweimal mit jeweils 90 g Perkadox 16 und verdünnt mit 10 kg Aceton/Isopropanol Gemisch (93:7). Nach 22 h Reaktionszeit wurde die Polymerisation abgebrochen und auf Raumtemperatur abgekühlt.
Das Polyacrylat hat einen K-Wert von 60,0 einen Feststoffgehalt von 53,5 %, ein mittleres Molekulargewicht von Mw = 602000 g/mol, Polydispersität (Mw/Mn) = 7,1

Basispolymer 3 (B3)

Es wurde analog Beispiel 1 vorgegangen. Zur Polymerisation wurden 36 kg 2-Ethylhexylacrylat, 20,4 kg Methylacrylat, 2,4 kg Acrylsäure und 1,2 kg HEMA in 40 kg Aceton/Isopropanol (90:10) polymierisiert. Initiiert wurde zweimal mit jeweils 30 g AIBN, zweimal mit jeweils 90 g Perkadox 16 und verdünnt mit 10 kg Aceton/Isopropanol Gemisch (90:10). Nach 22 h Reaktionszeit wurde die Polymerisation abgebrochen und auf Raumtemperatur abgekühlt. Das Polyacrylat hat einen K-Wert von 57, einen Feststoffgehalt von 53,8 % und ein mittleres Molekulargewicht von Mw = 526000 g/mol, Polydispersität (Mw/Mn) = 6,8

Basispolymer 4 (B4)

Ein für radikalische Polymerisationen konventioneller Reaktor wurde mit 36 kg 2-Ethylhexylacrylat, 21 kg tert-Butylacrylat, 2,4 kg Acrylsäure, 0,6 kg HEMA, 40 g Dithiobenzoesäurebenzylester und 40 kg Aceton befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h wurden erneut 30 g AIBN zugegeben. Nach 4 h verdünnte man mit 5 kg Aceton. Nach 5 und nach 7 h erfolgte eine Zugabe von jeweils 90 g Perkadox 16™ (Fa. Akzo). Nach 22 h Reaktionszeit wurde die Polymerisation abgebrochen und auf Raumtemperatur abgekühlt.
Das Polyacrylat hat einen K-Wert von 53,6, einen Feststoffgehalt von 54,9 %, ein mittleres Molekulargewicht von Mw = 479000 g/mol, Polydispersität (Mw/Mn) = 2,4.

Verfahrene 1: Aufkonzentration der Basispolymere für die viskoelastischen Träger:

Die mit Hydroxy-Gruppen funktionalisierten Acrylatcopolymere (Basispolymer 1 - 4) werden mittels BERSTORFF-Einschneckenextruder (Aufkonzentrationsextruder) weitestgehend vom Lösemittel befreit. Exemplarisch sind hier die Parameter der Aufkonzentration des Basispolymeren 1 dargestellt. Die Drehzahl der Schnecke betrug 160 U/min, der Motorstrom 16 A, es wurde ein Durchsatz von 61,5 kg flüssig/h realisiert. Zur Aufkonzentration wurde an 3 verschiedenen Domen ein Vakuum angelegt. Die Unterdrücke betrugen jeweils 440 mbar, 50 mbar und 5 mbar, wobei das geringste Vakuum im ersten Dom angelegt wurde. Die Austrittstemperatur des aufkonzentrierten Hotmelts lag bei 104 °C. Der Feststoffgehalt betrug nach diesem Aufkonzentrationsschritt 99,8%.

Verfahren 2: Herstellung der Füllstoff-modifizierten viskoelastischen Träger, Abmischung mit dem thermischen Vernetzter

Die nach den Verfahren 1 aufkonzentrierten Acrylatpolymere wurden in einem Fütterextruder (Einschneckenförderextruder der Firma TROESTER) aufgeschmolzen und mit diesem als Polymerschmelze in einen Doppelschneckenextruder gefördert (Fa. LEISTRITZ, Deutschland, Bez. LSM 30/34). Das Aggregat wird von außen elektrisch beheizt und über verschiedene Gebläse luftgekühlt. Die Geometrie der Mischschnecken wurde so gewählt, dass bei guter Verteilung der Füllstoffe und des Vernetzungssystems in der Polymermatrix gleichzeitig eine kurze Verweilzeit der Acrylatmasse im Extruder gewährleistet ist. Dazu wurden die Mischwellen des Doppelschneckenextruders so angeordnet, dass sich fördernde und mischende Elemente abwechseln. Die Zugabe der Füllstoffe und des jeweiligen Vernetzungssystems erfolgt mit geeignetem Dosierequipment gegebenenfalls an mehreren Stellen in die druckfreien Förderzonen des Doppelschneckenextruders. Zur Dosierung des Vernetzungssystems werden gegebenenfalls Dosierhilfsmittel eingesetzt. Gegebenenfalls kann am Doppelschneckenextruder eine Vakuumpumpe angeschlossen werden, um die compoundierte Selbstklebemasse von Gaseinschlüssen zu befreien. Der fertig compoundierte Acrylatmasse wird dann mittels einer dem Mischextruder nachgeschalteten Schmelzepumpe einer Verteilerdüse zugeführt, die den viskoelastischen Träger in den ersten Walzenspalt des Beschichtungskalanders fördert.
Die Beschichtung der erfindungsgemäßen Selbstklebemassen erfolgt mittels 2-Walzenkalander gemäß einem der unten beschriebenen Verfahren.

Verfahren 3: Herstellung der 3-Schichtaufbauten mittels 2-Walzenkalander

Das Verfahren wurde wie in Fig. 2 beschrieben durchgeführt. Mittels Verteilerdüse (1) wird die mit dem Vernetzungssystem und ggf. Füllstoffen fertig compoundierte viskoelastische Masse (3) dem Walzenspalt zugeführt. Die Ausformung der viskoelastischen Masse zu einem viskoelastischen Film erfolgt zwischen den Kalanderwalzen (W1) und (W2) im Walzenspalt zwischen zwei Selbstklebemassen (7a, 7b), die ihrerseits auf anti-adhäsiv ausgerüsteten Trägermaterialien (5a, 5b) beschichtet zugeführt werden. Dabei kommt es gleichzeitig zur Ausformung der viskoelastischen Masse auf die eingestellte Schichtdicke und zur Beschichtung mit den beiden zugeführten Selbstklebemassen.

Um die Verankerung der Selbstklebemassen (7a, 7b) auf der ausgeformten, viskoelastischen Trägerschicht (4) zu verbessern, werden die Selbstklebemassen vor der Zuführung in den Walzenspalt mittels Corona-Station (8) coroniert (Corona-Anlage der Firma VITAPHONE, Dänemark, 100 W min / m²). Durch diese Behandlung entstehen aktive OH-Gruppen an der Oberfläche der Selbstklebemassen, die nach der Herstellung des Dreischichtverbundes zu einer verbesserten chemischen Anbindung an die viskoelastische Trägerschicht führen.

Die Bahngeschwindigkeit bei Durchlaufen der Beschichtungsanlage beträgt 40 m/min. Nach Verlassen des Walzenspaltes wird ggf. ein anti-adhäsiver Träger (5a) ausgedeckt und das fertige Dreischichtprodukt (6) mit dem verbleibenden zweiten anti-adhäsiven Träger (5b) aufgewickelt.

Im Folgenden werden konkrete Beispiele zur Herstellung der Selbstklebemassen und Beschichtung der erfindungsgemäßen Klebebänder vorgestellt, ohne dass durch die Wahl der angegebenen Formulierungen, Konfigurationen und Prozessparamter die Erfindung unnötig eingeschränkt werden soll.

### Beispiel MT 1

Das Basispolymer B1 wurde gemäß Verfahren 1 aufkonzentriert (Feststoffgehalt 99,7%) und anschließend gemäß Verfahren 2 mit 1,6 Gew% (bezogen auf Acrylatcopolymer) des trimerisierten aliphatischen Diisocyanates Desmodur XP 2410 (Fa. BAYER AG, Deutschland) abgemischt. Zur Verbesserung der Dosierfähigkeit wurde das trimerisierte Diisocyanat mit dem flüssigen Phophatester REOFOS 65 (Fa. GREAT LAKES, USA) im Verhältnis 1 zu 3 verdünnt. Die Prozessparameter sind in Tabelle 1 zusammengefasst. Die Beschichtung zwischen die zuvor auf silikonisierte Polyesterfolien beschichtete Masseschichten PA 1 erfolgt am 2-Walzenauftragswerk bei Walzentemperaturen von 100 °C gemäß Verfahren 3. Die Schichtdicke des viskoelastischen Trägers VT 1 betrug 825 $\mu$m. Die Coronaleistung betrug 100 W min / m².

Nach 7 Tagen Raumtemperaturlagerung wurden die klebtechnischen Daten jeweils der offenen und abgedeckten Seite gemessen. Die Daten des Beispiels 1 Tabelle 2 zusammengefasst.

### Beispiel MT 2

Das Basispolymer B1 wurde gemäß Verfahren 1 aufkonzentriert (Feststoffgehalt 99,7%) und analog Beispiel 1 mit 0,8 Gew% (bezogen auf Acrylatcopolymer) des trimerisierten aliphatischen Diisocyanates Desmodur XP 2410 (Fa. BAYER AG, Deutschland) abgemischt. Anschließend wurde analog Beispiel 1 zwischen jeweils zuvor auf silikonisierte Polyesterfolien beschichtete Masseschichten PA 1 am 2-Walzenauftragswerk gemäß Verfahren 3 beschichtet. Die Schichtdicke des viskoelastischen Trägers VT 2 betrug 800 $\mu$m. Die Coronaleistung betrug 100 W min / m².

Nach 7 Tagen Raumtemperaturlagerung wurden die klebtechnischen Daten jeweils der offenen und abgedeckten Seite gemessen. Die Daten des Beispiels MT 2 sind in Tabelle 2 zusammengefasst.

### Beispiel MT 3

Das Basispolymer B1 wurde gemäß Verfahren 1 aufkonzentriert (Feststoffgehalt 99,7%) und anschließend gemäß Verfahren 2 mit 6,5 Gew% Hohlglaskugeln Q-CEL 5028 (Fa. Potters Industries) und 2,13 Gew% (bezogen auf Acrylatcopolymer) des hydrophilen, aliphatischen Polyisocyanats Bayhydur VP LS 2150/1 (Fa. BAYER AG, Deutschland) abgemischt. Die Prozessparameter sind in Tabelle 1 zusammengefasst. Die Beschichtung zwischen die zuvor auf silikonisierte Polyesterfolien beschichtete Masseschichten PA 1 erfolgt am 2-Walzenauftragswerk bei Walzentemperaturen von 100°C gemäß Verfahren 3. Die Schichtdicke des viskoelastischen Trägers VT 3 betrug 865 $\mu$m. Die Coronaleistung betrug 100 W min/m².

Nach 7 Tagen Raumtemperaturlagerung wurden die klebtechnischen Daten jeweils der offenen und abgedeckten Seite gemessen. Die Daten des Beispiels MT 3 sind in Tabelle 2 zusammengefasst.

### Beispiel MT 4

Das Basispolymer B2 wurde gemäß Verfahren 1 aufkonzentriert (Feststoffgehalt 99,7%) und anschließend gemäß Verfahren 2 mit 18 Gew% Mikrosöhl-Kreide (MS40, Fa. Söhlde) und 0,19 Gew% (bezogen auf Acrylatcopolymer) des hydrophilen, aliphatischen Polyisocyanats Bayhydur VP LS 2150/1 (Fa. BAYER AG, Deutschland) abgemischt. Die Prozessparameter sind in Tabelle 1 zusammengefasst. Die Beschichtung zwischen die zuvor auf silikonisierte Polyesterfolien beschichtete Masseschichten PA 1 erfolgt am 2-Walzenauftragswerk bei Walzentemperaturen von 100°C gemäß Verfahren 3. Die Schichtdicke des viskoelastischen Trägers VT 4 betrug 790 $\mu$m. Die Coronaleistung betrug 100 W min / m².

Nach 7 Tagen Raumtemperaturlagerung wurden die klebtechnischen Daten jeweils der offenen und abgedeckten Seite gemessen. Die Daten des Beispiels MT 4 sind in Tabelle 2 zusammengefasst.

Beispiel MT 5

Das Basispolymer B3 wurde gemäß Verfahren 1 aufkonzentriert (Feststoffgehalt 99,8%) und anschließend gemäß Verfahren 2 mit 3 Gew% nicht expandierten Mikrohohlkugeln Expancel 092 DU 40 (Fa. Akzo Nobel, Deutschland) und 1,0 Gew% (bezogen auf Acrylatcopolymer) des trimerisierten aliphatischen Diisocyanates Desmodur XP 2410 (Fa. BAYER AG, Deutschland) abgemischt. Die Prozessparameter sind in Tabelle 1 zusammengefasst. Durch Einbringen von Wärme wurde die Mischung im Extruder expandiert und anschließend zwischen die zuvor auf silikonisierte Polyesterfolien beschichtete Masseschichten PA 1 gemäß Verfahren 3 bei Walzentemperaturen von 130°C beschichtet. Die Schichtdicke des expandierten viskoelastischen Trägers VT 5 betrug 740 $\mu$m. Die Coronaleistung zur Vorbehandlung der Haftklebeschichten betrug 100 W min / m$^2$.
Nach 7 Tagen Raumtemperaturlagerung wurden die klebtechnischen Daten jeweils der offenen und abgedeckten Seite gemessen. Die Daten des Beispiels MT 5 sind in Tabelle 2 zusammengefasst.

Beispiel MT 6

Das Basispolymer B6 wurde gemäß Verfahren 1 aufkonzentriert (Feststoffgehalt 99,8%) und anschließend gemäß Verfahren 2 mit 5 Gew% hydrophobiertem Kieselgel Aerosil R 972 (Fa. Degussa, Deutschland) und 1,0 Gew% (bezogen auf Acrylatcopolymer) des trimerisierten aliphatischen Diisocyanates Desmodur XP 2410 (Fa. BAYER AG, Deutschland) abgemischt. Die Prozessparameter sind in Tabelle 1 zusammengefasst. Anschließend wurde zwischen die zuvor auf silikonisierte Polyesterfolien beschichtete Masseschichten PA 1 gemäß Verfahren 3 bei Walzentemperaturen von 100°C beschichtet. Die Schichtdicke des viskoelastischen Trägers VT 6 betrug 750 $\mu$m. Die Coronaleistung zur Vorbehandlung der Haftklebeschichten betrug 100 W min / m$^2$.
Nach 7 Tagen Raumtemperaturlagerung wurden die klebtechnischen Daten jeweils der offenen und abgedeckten Seite gemessen. Die Daten des Beispiels MT 6 sind in Tabelle 2 zusammengefasst.

Beispiel MT 7

Analog der Herstellung von MT 3 wurden das Basispolymer B1 wurde gemäß Verfahren 1 aufkonzentriert (Feststoffgehalt 99,7%), gemäß Verfahren 2 mit 6,5 Gew% Hohlglaskugeln Q-CEL 5028 (Fa. Potters Industries) und 2,13 Gew% (bezogen auf Acrylatcopolymer) des hydrophilen, aliphatischen Polyisocyanats Bayhydur VP LS 2150/1 (Fa. BAYER AG, Deutschland) abgemischt und gemäß Verfahren 3 bei Walzentemperaturen von 100°C zwischen die zuvor auf silikonisierte Polyesterfolien beschichtete Masseschichten PA 2 beschichtet. Die Schichtdicke des viskoelastischen Trägers VT 3 betrug 865 $\mu$m. Die Coronaleistung zur Vorbehandlung der Haftklebeschichten betrug 100 W min / m$^2$.
Nach 7 Tagen Raumtemperaturlagerung wurden die klebtechnischen Daten jeweils der offenen und abgedeckten Seite gemessen. Die Daten des Beispiels MT 7 sind in Tabelle 2 zusammengefasst.
Für den Fachmann völlig überraschend ist die Beschichtbarkeit der Hotmelt-Masse nach Zugabe und Einmischung des Isocyanat-Vernetzungssystems in die Polyacrylatmasse bei den im Compoundieraggregat herrschenden Temperaturen zwischen 60 °C und 120 °C, vorzugsweise zwischen 70 °C und 100 °C. Unter Beschichtbarkeit wird in diesem Zusammenhang die Eignung zum Ausformen der mit Vernetzer abgemischten Polyacrylatmasse in viskoelastische Trägerschichten und zum Aufbringen zwischen bahnförmige, coronabehandelte Haftklebemassen, die auf Trennmaterial vorliegen mittels Beschichtungsdüse oder Walzenbeschichtungswerk verstanden.
Zu erwarten war eine Vernetzung bzw. Vergelung der viskoelastischen Trägermasse, so dass eine nachfolgende Beschichtung nicht mehr möglich gewesen wäre. Tatsächlich können die beschriebenen viskoelastischen Trägermassen aber innerhalb eines gewissen Zeitraumes nach der Vernetzerdosierung und Compoundierung beschichtet werden. Die Verarbeitungszeit ist stark abhängig von Molekulargewicht und Hydroxy-Funktionalisierung der Polyacrylatmasse, sowie von Typ und Menge des verwendeten Vernetzungssystem und den herrschende Prozessbedingungen wie z.B. Massetemperatur und geometrische Beschaffenheit des Compoundieraggregates.
Gemäß des bekannten Standes der Technik hätte der Fachmann eine sofortige Reaktion der Isocyanate mit den im Polyacrylat enthaltenen OH-Gruppen mit resultierender Unbeschichtbarkeit der anvernetzten Masse erwartet. Zur Vermeidung hätte er blockierte Isocyanate bei extrem hohen Temperaturen mit dem Nachteil der in der Klebmasse verbleibenden und störenden Blockierungsmittel einsetzen müssen. Diese würde die klebtechnische Performance der angrenzenden Haftklebeschichten stark stören.
Ebenfalls war es für den Fachmann nicht zu erwarten, dass eine effektive Nachvernetzung der viskoelastischen Trägermassen bei Raumtemperatur ohne kontrollierten Einflusses aktinischer Strahlung möglich war, signifikant zu zeigen durch SAFT und SSZ-Stahl 10N.
Wie den Daten der Tabelle zu entnehmen ist, haben die erfinderisch doppelseitig klebenden Montageklebebänder sehr gute klebtechnische Daten. Besonders positiv ist das ausgewogene Klebprofil der jeweiligen Seiten. Bei gleicher Klebmassenschicht auf beiden Seiten des Klebebandes zeigen diese nahezu gleiche klebtechnische Daten. Dies zeigt die homogene Vernetzung durch die Schicht hindurch. Dies ist für den Fachmann überraschend. Zudem zeigen diese dreischichtigen Klebebänder keine Delaminierung. Die Verankerung der Schichten untereinander ist durch die Coronabehandlung der Haftklebeschichten und der Nachvernetzung der angenzenden viskoelastische Trägerschicht sehr gut.

## Tabelle 1: Viskoelastische Träger

| Bei-spiel | Basispolymer | | | Vernetzereinarbeitung und Beschichtung | | | | | | | | | | |
| --- | --- | --- | --- | --- | --- | --- | --- | --- | --- | --- | --- | --- | --- | --- |
| | Polymer | K-Wert | Anteil Zuschlagstoffe [Gew.%] | Vernetzer – Typ und Menge [% Vernetzer auf Polymer] | Massedurchsatz DSE [kg/h] | Drehzahl DSE [1/min] | Solltemperatur DSE [°C] | Stromaufnahme DSE [A] | Druck Ausgang DSE [bar] | Massetemperatur nach DSE [°C] | Beschichtungstemperatur Rakelwalze / Beschichtungswalze [°C] | Verarbeitungszeit [min] | Masseauftrag [g/m²] | Schichtdicke [µm] |
| VT 1 | B1 | 69 | --- | 1,6 % XP 2410 | 10 | 100 | 100 | 12 | 15 | 100 | 100 / 100 | 10 | 870 | 825 |
| VT 2 | B1 | 69 | --- | 0,8 % XP 2410 | 10 | 100 | 100 | 11 | 15 | 98 | 100 / 100 | 15 | 840 | 800 |
| VT 3 | B1 | 69 | 6,5 % Hohlglaskugeln Q-CEL 5028 | 2,13 % Bayhydur VP LS 2150/1 | 11 | 100 | 80 | 11 | 15 | 98 | 100 / 100 | 5 | 750 | 865 |
| VT 4 | B2 | 60 | 18 % Mikrosöhl MS 40 C160 | 0,19 % Bayhydur VP LS 2150/1 | 16 | 150 | 100 | 19 | 38 | 123 | 100 / 100 | 15 | 985 | 790 |
| VT 5 | B3 | 57 | 3 % Expancel 092 DU 40 | 1,0 % XP 2410 | 10 | 100 | 125 | 10 | 28 | 140 | 130 / 130 | 5 | 375 | 740 |
| VT 6 | B4 | 54 | 5 % Aerosil R 972 | 1,0 % XP 2410 | 10 | 100 | 100 | 18 | 25 | 100 | 100 / 100 | 10 | 800 | 750 |

Tabelle 2: Produktaufbau und klebtechnische Daten der Dreischichtaufbauten

| Bei-spiel | Dreischichtprodukt | | | Gesamt-dicke [µm] | Klebkraft Stahl, [N/cm] | | Scherstandzeit 10 N 23°C [min] | | Wandhakentest [min] | | SAFT [µm] | |
|---|---|---|---|---|---|---|---|---|---|---|---|---|
| | Haftkleber 1 | Visko-elastische Trägerschicht | Haftkleber 2 | | offene Seite | abgedeckte Seite | offene Seite | abgedeckte Seite | offene Seite | abgedeckte Seite | offene Seite | abgedeckte Seite |
| MT 1 | 50 g/m² PA 1 | VT 1 | 50 g/m² PA 1 | 923 | 10,6 | 10,7 | 7300 | 7368 | 5400 | 5300 | 750 µm (200°C) | 754 µm (200°C) |
| MT 2 | 50 g/m² PA 1 | VT 2 | 50 g/m² PA 1 | 900 | 11,8 | 11,6 | 5328 | 5450 | 3876 | 3860 | 937 µm (200°C) | 915 µm (200°C) |
| MT 3 | 50 g/m² PA 1 | VT 3 | 50 g/m² PA 1 | 862 | 8,5 | 8,7 | > 20000 | > 20000 | 9320 | 9360 | 340 µm (200°C) | 325 µm (200°C) |
| MT 4 | 50 g/m² PA 1 | VT 4 | 50 g/m² PA 1 | 885 | 10,7 | 10,6 | 15460 | 15386 | 7540 | 7468 | 545 µm (200°C) | 552 µm (200°C) |
| MT 5 | 50 g/m² PA 1 | VH 5 | 50 g/m² PA 1 | 838 | 13,5 | 13,6 | > 20000 | > 20000 | > 10000 | > 10000 | 795 µm (200°C) | 801 µm (200°C) |
| MT 6 | 50 g/m² PA 1 | VH 6 | 50 g/m² PA 1 | 850 | 12,7 | 12,6 | > 20000 | > 20000 | > 10000 | > 10000 | 250 µm (200°C) | 256 µm (200°C) |
| MT 7 | 50 g/m² PA 2 | VT 3 | 50 g/m² PA 2 | 964 | 9,5 | 9,4 | > 20000 | > 20000 | > 10000 | > 10000 | 322 µm (200°C) | 342 µm (200°C) |

**Patentansprüche**

1. Klebeband aus einer viskoelastischen Trägerschicht und zwei außenliegenden Klebeschichten, **dadurch gekennzeichnet, dass**

die Trägerschicht aus einem photoinitiatorfreien homogen vernetzten Polymer auf Acrylat- und/oder Methacrylatbasis besteht,

die Schichtdicke des Klebebandes zwischen 300 und 10.000 $\mu$m beträgt und

das Klebeband mit Herstellgeschwindigkeiten zwischen 0,5 m/min und 100 m/min nach einem Verfahren erhältlich ist, das die folgenden Schritte umfasst:

- Zusetzen zumindest eines thermischen Vernetzers zur Schmelze eines Polyacrylatcopolymers auf Basis von Acrylsäureestern und/oder Methacrylsäureestern,
- Fördern des mit dem Vernetzer versehenen Polyacrylatcopolymers zu einer Beschichtungseinheit,
- Einbringen des mit dem Vernetzer versehenen Polyacrylatcopolymers zwischen zwei jeweils vorbehandelte, flächig auf jeweils einen Liner beschichtete Klebemasseschichten,
- Vernetzung des Polyacrylatcopolymers nach der Beschichtung ohne Einfluss aktinischer Strahlung.

2. Klebeband nach Anspruch 1, **dadurch gekennzeichnet, dass**

zumindest eine der Klebeschichten, insbesondere beide Klebeschichten solche auf Basis von Selbstklebemassen sind.

3. Klebeband nach zumindest einem der vorangehenden Ansprüche, **dadurch gekennzeichnet, dass**

beide Klebeschichten solche auf Basis von Selbstklebemassen sind.

**Claims**

1. Adhesive tape comprising a viscoelastic carrier layer and two outer adhesive layers, **characterized in that**

the carrier layer consists of a photoinitiator-free homogeneously crosslinked polymer based on acrylate and/or methacrylate,

the layer thickness of the adhesive tape is between 300 and 10,000 $\mu$m, and

the adhesive tape is obtainable with production speeds of between 0.5 m/min and 100 m/min by a method which comprises the following steps:

- adding at least one thermal crosslinker to the melt of a polyacrylate copolymer based on acrylic esters and/or methacrylic esters,
- conveying the polyacrylate copolymer provided with the crosslinker to a coating unit,
- introducing the polyacrylate copolymer provided with the crosslinker between two adhesive layers each of which has been pretreated and has been coated two-dimensionally onto a respective liner,
- crosslinking the polyacrylate copolymer after the coating operation, without influence of actinic radiation.

2. Adhesive tape according to Claim 1, **characterized in that**

at least one of the adhesive layers, particularly both adhesive layers, are based on self-adhesive compositions.

3. Adhesive tape according to at least one of the preceding claims, **characterized in that**

both adhesive layers are based on self-adhesive compositions.

**Revendications**

1. Bande adhésive constituée d'une couche support viscoélastique et de deux couches adhésives extérieures, **caractérisée en ce que**

la couche support est constituée d'un polymère réticulé de manière homogène sans photoinitiateur, à base d'acrylate et/ou de méthacrylate,

l'épaisseur de couche de la bande adhésive est comprise entre 300 et 10 000 $\mu$m et

la bande adhésive peut être obtenue à des vitesses de fabrication comprises entre 0,5 m/min et 100 m/min par un procédé, qui comprend les étapes suivantes :

- l'ajout d'au moins un agent de réticulation thermique à la masse fondue d'un copolymère de polyacrylate à base d'esters de l'acide acrylique et/ou d'esters de l'acide méthacrylique,
- le transport du copolymère de polyacrylate muni de l'agent de réticulation dans une unité de revêtement,
- l'introduction du copolymère de polyacrylate muni de l'agent de réticulation entre deux couches de masse adhésive, chacune prétraitées, chacune revêtues sur la surface d'une doublure,
- la réticulation du copolymère de polyacrylate après le revêtement sans l'effet d'un rayonnement actinique.

2. Bande adhésive selon la revendication 1, **caractérisée en ce qu'**au moins une des couches adhésives, notamment les deux couches adhésives, sont à base de masses auto-adhésives.

3. Bande adhésive selon au moins l'une quelconque des revendications précédentes, **caractérisée en ce que** les deux couches adhésives sont à base de masses auto-adhésives.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4181752 A
- EP 084220 A
- EP 202938 A
- EP 277426 A
- US 4330590 A
- DE 4303183 A1
- DE 4029896 A1
- DE 19846902 A1
- DE 10163545 A1
- EP 1361260 A1
- DE 10221402 A1
- US 6765078 B2
- DE 10036901 A1
- US 20040092685 A1
- EP 0824111 A1
- EP 826698 A1
- EP 824110 A1
- EP 841346 A1
- EP 850957 A1
- US 5945491 A
- US 5854364 A
- US 5789487 A
- EP 1308492 A

**In der Beschreibung aufgeführte Nicht-Patentliteratur**

- **T.G. FOX.** *Bull. Am. Phys. Soc.,* 1956, vol. 1, 123